# EUROPEAN PATENT SPECIFICATION

(11) **EP 0 580 915 B1**
(45) Date of publication and mention of the grant of the patent: **15.05.1996**
(21) Application number: 92500099.4
(22) Date of filing: 31.07.1992
(51) Int. Cl.: C01B 25/46

(54) **Process for the elimination of build-up contaminants in an organic stream for production of pure phosphoric acid**
Verfahren zur Entfernung von abgelagerten Verunreinigungen in einem organischen Strom zur Erzeugung reiner Phosphorsäure
Procédé d'élimination des agents contaminants accumulés dans un courant organique pour la production d'acide phosphorique

(43) Date of publication of application: 02.02.1994
(73) Proprietor: FORET, S.A., E-08008 Barcelona (ES)
(72) Inventor: Romero Moreno, Roberto, E-21006 Huelva (ES)
(74) Representative: Alonso Langle, Emilio

(56) References cited:
- EP-A- 0 040 487
- FR-A- 2 132 203
- GB-A- 1 210 446
- US-A- 4 108 963
- CHEMICAL ABSTRACTS, vol. 81, no. 16, 21 October 1974, Columbus, Ohio, US, abstract no. 93561u, page 122-3; & JP-A-7 445 895

## Description

### OBJECT OF THE INVENTION

The object of the present invention is to eliminate, from an organic current composed of a mixture of TBP and kerosene and used in the production of pure phosphoric acid from an impure phosphoric acid obtained by a wet process by attack of phosphatic rock with sulphuric acid, the undesirable organic and inorganic contaminants that build up in the current, reducing these contaminants to levels that ensure satisfactory working conditions for the current.

The second object and advantage is the efficient recovery of a large part of the residual H3PO4 that remains in the organic current that leaves the stripping column.

Another object of the present invention is that the regeneration of the organic current has maximum efficiency when the regeneration is performed with an alkaline solution at a high pH.

On the other hand, the regeneration at a high pH presents the risk of causing excessive saponification, which would give rise to the formation of undesirable foams. Another object and advantage of this invention is the simple, economical and efficient way of neutralizing the principles that give rise to this detergency, treating the organic current with an internal acid current of the process that avoids the contamination that would be produced by the use of any other type of acid.

Lastly, another object of this invention is the comprehensive regeneration process because of its high efficiency, economy of costs of raw materials, scant electrical power requirement and simplicity.

### BACKGROUND OF THE INVENTION

The applicant produces pure phosphoric acid from an impure phosphoric acid obtained by the wet process by attack of phosphorite with sulphuric acid.

Basically, the production of pure phosphoric acid comprises the following stages:
1.- Extraction of the impure phosphoric acid with an organic current (solvent), composed of a mixture of TBP and kerosene, with the H3PO4 passing to the organic current (loaded extract) and the impurities remaining in the aqueous current (refined).
2.- Washing of the loaded extract, with a solution of purified phosphoric acid from the next stage and sodium hydroxide, to eliminate some of the impurities coextracted with the H3PO4 in the loaded extract.
3.- Stripping of the H3PO4 contained in the washed loaded extract, with demineralized water, obtaining a dilute purified phosphoric acid, and recycling the depleted organic current (recycled solvent) to stage 1 for a later extraction of impure phosphoric acid.

The organic current used in successive closed cycles in the way described above, becomes progressively enriched with organic and inorganic contaminants that may come to decrease its extraction power, impede the separation of aqueous-organic phases and harm its hydrodynamic behavior, resulting in a decrease of the operating yields and of the production capacity as well as an increase of the organic current losses in the aqueous currents that come out as by-products of the process.

To avoid these problems, the impure phosphoric acid is commonly pre-treated and/or the organic current is treated after stripping, in a continuous process or by batches, with alkaline phosphate solutions and later treatment with active carbon and filtering, to produce a regenerated organic current.

The solvent, composed of a mixture of TBP and kerosene, which is used in successive cycles for the production of pure phosphoric acid from wet process phosphoric acid, becomes progressively enriched with contaminants such as fluorine, chlorine, iodine, silica and organic mater.

The fluorine, chlorine, iodine and silica come from the impure phosphoric acid, while the organic matter may originate either in the starting acid or in breakdown products of TBP of kerosene.

It has been proven that high levels of these impurities in the solvent create many operating problems, decreasing yields and production capacity, and increasing the losses of solvent in the aqueous currents that come out as by-products of the process.

The part of the solvent linked to the contaminating principles, obviously does not have the capacity to extract H3PO4 from the impure phosphoric acid, which entails a decrease in its extraction power.

An increase is also produced in the viscosity and density of the organic current, which has a negative effect on the current's hydrodynamic behavior since it increases the risk of flooding the equipment and the aqueous phase entrainments.

Moreover, high concentrations of chlorine and fluorine may cause corrosion in some equipment.
Silica compounds give rise to a gelatinous precipitate that causes emulsion problems, impeding the separation of organic-aqueous phases and clogging equipment.

The impurities of organic nature cause the appearance of a dark gelatinous layer in the interface that impedes separation and causes the loss of the solvent that remains occluded in it. It also leads to periodic halts of the plant, required to permit cleaning of equipment.

The present-day technique of pre-treating the impure phosphoric acid with caustic soda or alkaline phosphate solutions, with later treatment with active carbon, may be a supplementary solution but, considered in an isolated way, what it achieves is a delay in the appearance of the problems mentioned above, so the organic current must necessarily be regenerated in batches or in a continuous process.

Another possibility is the washing of the organic current with a sodium hydroxide solution and the later separation of phases. The effectiveness of this washing process is limited by the fact that the high alkalinity of the soda gives rise to reactive saponification reactions, for example, with fatty acids, causing detergency problems that impede the separation of the organic and aqueous phases and the separation of the precipitated solids.

To compensate this phenomenon, some experts recommend pre-treatment of the impure phosphoric acid in the way described in Point 1 above, while others use treatment with nitric acid to acidify the solvent washed with NaOH.

The use of nitric acid has the drawback of its capacity of being extracted by the organic current, thereby contaminating it. Moreover, the TBP may break down, with the consequent loss of solvent.

Lastly, the organic current may be washed with an aqueous solution of alkaline phosphate and although the effectiveness of the treatment is lower since the pH of the solution is lower, the degree of saponification is also lower so the residual organic impurities and the detergency may be eliminated by means of treatment with active carbon followed by filtering.

### DESCRIPTION OF THE INVENTION

The present invention relates to a process for performing the continuous regeneration of an organic current composed of a mixture of TBP and kerosene, after its cyclical use in the manufacture of pure phosphoric acid from impure phosphoric acid. The process comprises the three following mixer-settler stages:
a.- Washing of the organic current with fresh water, in a mixer, with a solvent/water ratio by volume of 4/1 to 8/1 at a temperature between 10 and 70ºC.
   Separation of the resulting mixture in a settler in two phases, an organic phase that passes by overflow to the mixer of the second stage, and an aqueous phase that passes by gravity to the mixer of the third stage.
b.- Contact in a mixer of the organic phase from the foregoing settler, with an alkaline solution of 2 to 10% by weight and an organic phase to aqueous phase ratio by volume of 1/1 to 4/1 at a temperature between 20 and 60ºC.
   Separation of the resulting mixture in a settler in two phases, an organic phase that passes by overflow to the mixer of the following stage, and an aqueous phase with a precipitated solid that leaves the process and is sent to the effluent treatment plant.
3.- Contact in a mixer of the organic phase from the foregoing settler with the aqueous phase from the first settler, at a temperature between 20 and 60ºC.
   Separation of the resulting mixture in a settler, in a regenerated organic phase, which passes by overflow to the recycled solvent stock, and an aqueous phase that passes by gravity to a wash water tank from which it is recycled to the first mixer to be placed in contact with the organic current to be treated.

From the wash water circuit, a quantity is drawn off to limit the impurities content, while maintaining the level constant in the wash water tank by means of the addition of fresh water.

### DESCRIPTION OF THE DRAWINGS

The sole figure shows an outline of the development of the process in which the practical possibilities of the invention are illustrated.

### DESCRIPTION OF THE PROCESS

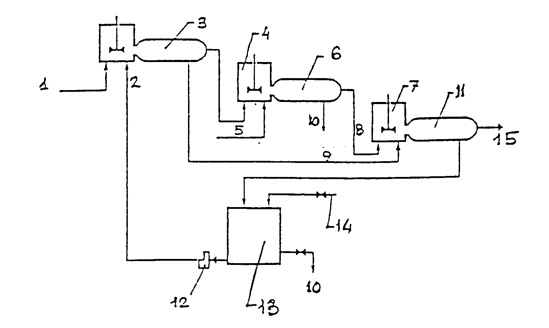

The process of the present invention consists of the continuous treatment of a part (1) of the organic current from the stripping process, by means of three stages in a series of mixer-settlers as shown in Fig.1 and described as follows:

In the first stage, the current (1) from the stripping process, with a residual concentration of H3PO4 depending on the yield of the operation, is placed in contact with fresh water (2) from the wash water tank in order to recover the H3PO4 and increase the effectiveness of the regeneration in the next stage.

The resulting mixture is separated in a settler (3) where an organic phase free of H3PO4 is obtained that overflows to the mixer (4) of the following stage, and an aqueous phase that contains the extracted phosphoric acid with a concentration of up to 2.5% H3PO4 that is sent by gravity to the mixer of the third stage.

An appropriate solvent-to-water ratio by volume is 4/1 to 8/1 (preferably 6/1). The appropriate operating temperature may range from 30 to 60ºC and the optimum temperature is between 15 and 55ºC.

In the second stage, the organic stage from the foregoing settler is placed in contact with a solution (5) of sodium or potassium hydroxide (preferably sodium hydroxide), to eliminate, fluorine, chlorine, silica, iodine and organic matter by precipitation of sodium or potassium compounds and formation of soluble salts in the aqueous phase.

This treatment may give rise to detergency phenomena depending on the build-up of organic matter in the solvent to be treated, which would impede the separation of phases.

The resulting mixture passes to a settler (6) where a regenerated organic phase that passes by overflow to the following mixer (7) and an aqueous phase with the salts of the soluble impurities and the decanted solids are obtained, which are sent through a tank to the effluent treatment plant (10) which is not depicted in the figure.

To achieve efficient regeneration and good separation conditions, a sodium hydroxide solution of 2 to 10% by concentration weight (preferably 5%), and the organic phase to aqueous phase ratio by volume will be 1/1 to 4/1 (preferably 3/1). The agitation should be sufficiently gentle to avoid the formation of persistent emulsions.

The treatment will be performed at a temperature between 30 and 60ºC and the optimum temperature will be 45 to 55ºC. In the third stage, the organic phase (8) from the foregoing settler (6) shows a cloudy appearance owing to the residual impurities it entrains, and to the detergency that may have been formed in the foregoing stage.

This organic phase is placed in contact with the aqueous phase from the first settler (3). Part of the phosphoric acid contained by the aqueous phase is used to eliminate and neutralize the impurities and the detergency from the foregoing stage, and the rest is extracted by the organic phase, which recovers in this way a large part of the residual acid it contained upon leaving the stripping process.

The resulting mixture passes to a settler (11) where the phases are easily separated, obtaining an aqueous phase that is sent to the first mixture through a wash water tank, and a regenerated organic phase (15) that is slightly yellow in color and shiny, which overflows to the solvent stock where it joins the rest of the current from the stripping process.

To avoid the build-up of impurities in the current (2) of water that is recycled from the settler (3) to the mixer (1), a continuous draw-off (12) will be established in the tank (13) of wash water (14), automatically making up the level by supply of fresh water.

With this process, it has been found that it is possible to maintain acceptable levels of impurities in the solvent by treating 3 to 10% (normally 5%) of the organic current from the stripping process.

### Examples :

### Study 1: Influence of the properties of the solvent on its behavior.

It is known that in liquid-liquid extraction operations, the flooding speed is inversely proportional to a power of the density and viscosity of the continuous phase (solvent) and directly proportional to another power of the difference of densities between phases.

Therefore, an increase in the density and viscosity of the solvent, as a result of the build-up of undesirable contaminants, decreases the agitation speed at which the columns are flooded.

Since the agitation speed of an operation is a percentage of the flooding speed, the agitation speed must be reduced to maintain the same level of entrainments, consequently decreasing the yield of the operation.

Moreover, in washing, the decantation speed is proportional to the difference of densities between the phases. When this difference decreases, the separation becomes worse, and the agitation speed must also be lowered to avoid causing entrainments, so it would be necessary to increase the flow of wash solution to maintain efficiency, reducing the yield of the operation.
In summary, an increase in the density and viscosity of the solvent should be avoided in order to maintain the yields of the operation.

### Test 1:

Take 250cc of solvent from the stripping column and mix with 40cc process water in a decantation funnel. The funnel should be vigorously agitated for 1/2 minute and the components should be at a temperature of about 50ºC.

After that, the phases should be separated by gravity, submerging the funnel in a thermostatic bath, where it should be kept at 50ºC.

About 210cc of the separated organic phase are treated with 70cc of a sodium hydroxide solution of 5% by weight. The operation is performed at about 45ºC, gently agitating the mixture and using a decantation funnel as well.

In the same way, the phases are separated by gravity at a temperature of about 45ºC.

Lastly, about 150cc of the organic phase washed with soda are mixed with 25cc of the acid aqueous phase from the first treatment with water. A decantation funnel is used, vigorously agitating the mixture for 1/2 minute at about 40ºC.

The separation of the phases is performed in the same way at a temperature of about 40º C.

The analytic results in each stage of the process are given below for the organic and aqueous phases.

| | Solvent "As-is" | Output solvent | | |
|---|---|---|---|---|
| | | Settler 1 | Settler 2 | Settler 3 |
| P205 % | 0.25 | 0.03 | 0.01 | 0.22 |
| SiO2 ppm | 1500 | 1400 | 150 | 140 |
| F ppm | 4800 | 450 | <10 | <10 |
| I ppm | 27000 | 26000 | 150 | 140 |
| Cl ppm | 160 | 150 | 30 | 25 |

| | Output aqueous phase | | |
|---|---|---|---|
| | Settler 1 | Settler 2 | Settler 3 |
| P205 % | 1.40 | 0.05 | 0.01 |
| SiO2 ppm | 500 | 3500 | 530 |
| F ppm | 180 | 1200 | 185 |
| I ppm | 6000 | 7.5 (%) | 6500 |
| Cl ppm | 60 | 300 | 65 |
| TOC ppm | 150 | 3500 | 200 |
| pH ppm | 1.8 | 13.5 | 6.5 |

### Test 2:

Solvent regeneration tests have been performed with various sodium phosphate solutions to compare their effectiveness with that obtained by using a sodium hydroxide solution.

The solvent was previously treated with process water as described in Test 1.

The tests were performed at ambient temperature, mixing 200g solvent in each case with various quantities of phosphate solution so that an equal quantity of Na was added.

Decantation funnels were used, gently agitating the mixture for 1/2 minute and separating the phases afterward by centrifuging. The analytical results are summarized below.

| Regeneration solution | NaOH | MSP | DSP | TSP |
|---|---|---|---|---|
| P205 % | - | 8.95 | 3.20 | 3.11 |
| NaOH % | 4.83 | 5.04 | 3.60 | 5.25 |
| Na/P (molar) | - | 1 | 2 | 3 |
| pH | 13.5 | 4.3 | 8.9 | 12.6 |

| Solvent | "As-is" | After treatment with | | | |
|---|---|---|---|---|---|
| | | NaOH | MSP | DSP | TSP |
| P205 % | 0.3 | 0.01 | 0.02 | 0.02 | 0.01 |
| SiO2 ppm | 1800 | 160 | 1000 | 800 | 600 |
| F ppm | 500 | 20 | 150 | 70 | 50 |

A higher degree of cloudiness and foaming was observed in the organic phases that had been treated with solution of a higher pH. It was found that this characteristic disappeared when the solvent was mixed with an aqueous solution of 1% P205, acquiring a shiny appearance after separation of the phases.

### Test 3:

To determine the effect of the regeneration of the solvent on the solvent's extraction capacity, 3 comparative tests were performed, using in each case, freshly prepared solvent, unregenerated solvent, and solvent regenerated as per Test 1.

200g of organic phase were mixed with 220g impure phosphoric acid, vigorously agitating the mixture to reach the point of equilibrium and maintaining a temperature of 50ºC.

Later, the phases were separated by centrifuging and the currents were analyzed, calculating the extraction yield as the quotient between the phosphoric acid extracted in the organic current divided by the phosphoric acid supplied.

The results are given below:

| | WPA | Fresh | Extract from solvent | |
|---|---|---|---|---|
| | | | Unregenerated | Regenerated |
| P205 % | 46.20 | 12.24 | 10.45 | 11.60 |
| Weight g | 220 | 237.14 | 231.16 | 247.47 |
| Yield % | - | 28.55 | 23.76 | 28.24 |

In view of the results, it was found that the regenerated solvent seems to have a behavior similar to that of the freshly prepared solvent.

### Test 4:

This test consists of a series of experiments at various temperatures. 80g of a solvent from the stripping process were mixed with 40g of a trisodium phosphate solution with 4% P205.

The solvent and the solution were heated to the desired temperature before putting them in a decantation funnel, where the mixture was vigorously agitated for 1/2 minute. After centrifuging, the mixture was separated and the solvent was analyzed. The following results were obtained:

| | Unregenerated | Temperature | | |
|---|---|---|---|---|
| | | 25ºC | 35ºC | 55ºC |
| P205 % | 0.40 | 0.09 | 0.09 | 0.09 |
| Sio2 ppm | 5900 | 315 | 197 | 119 |
| F ppm | 529 | 4 | 1 | 2 |
| Appearance | slightly cloudy | cloudy | slightly cloudy | shiny |

The treatment produced 40g aqueous solution and between 3.6 and 5.2g solid. On the basis of the TOC analysis of the solid and of the aqueous phase, it was calculated that approximately 70% organic impurities, expressed as TOC, were eliminated from the solvent by this treatment.

### Test 5:

A series of tests were performed, using various ratios of organic phase to aqueous phase (O/A). Solvent previously treated with water as described in Test 1 and sodium hydroxide solutions at 5% were used in the desired proportions.

Decantation funnels were used, vigorously agitating the mixture in them for 1/2 minute, and afterward the phases were separated by gravity, maintaining a temperature of about 50ºC.

A table summarizing the results of the tests is given below:

| | Solvent "As-is" | Regenerated solvent | | |
|---|---|---|---|---|
| | | O/A=1 | O/A=2 | O/A=4 |
| P205 % | 0.02 | 0.01 | 0.01 | 0.01 |
| SiO2 ppm | 2700 | 75 | 110 | 300 |
| F ppm | 450 | 1 | 2 | 15 |

### Test 6:

An experiment similar to that described in Test 1 was performed, except that a potassium phosphate solution was used in the second stage instead of sodium hydroxide. The solution contained 4% P205 and a K/P molar ratio of 3.

The analytical results for the solvent in each stage of the process are given below:

| | Solvent "As-is" | Output solvent | | |
|---|---|---|---|---|
| | | Settler 1 | Settler 2 | Settler 3 |
| P205 % | 0.25 | 0.03 | 0.01 | 0.22 |
| SiO2 PPM | 1500 | 1400 | 200 | 190 |
| F PPM | 480 | 450 | 15 | 15 |
| I PPM | 27000 | 26000 | 140 | 145 |
| Cl PPM | 160 | 150 | 30 | 25 |

## Claims

1. PROCESS FOR THE ELIMINATION OF BUILD-UP CONTAMINANTS IN AN ORGANIC STREAM FOR PRODUCTION OF PURE PHOSPHORIC ACID, comprising the continuos treatment of the organic current composed of a mixture of TBP (Tributylphosphate) and Kerosene in three stages, after its cyclical use in the manufacture of pure phosphoric acid from impure phosphoric, consisting in
washing of the organic current with fresh water in a mixer, with a solvent/water ratio by volume of 4/1 to 8/1 at a temperature between 10 and 70ºC,
separating the resulting mixture in a settler in two phases, an organic phase that passes by overflow to the mixer of the second stage and an aqueous phase passes by gravity to the mixer of the third stage,
contacting in a mixer of the second stage the organic phase from the foregoing settler with an alkaline solution of 2 to 10 % by weight and an organic phase to aqueous phase ratio by volume of 1/1 to 4/1 at a temperature between 20 and 60ºC,
separating the resulting mixture in a settler in two phases, the organic phase that passes by overflow to the mixer of the following stage, and an aqueous phase with a precipitated solid that leaves the process and is sent to the effluent treatment plant,
contacting the organic phase from the foregoing settler with the aqueous phase from the first settler at a temperature between 20 and 60ºC,
separating the resulting mixture in a settler, in a regenerated organic phase, which passes overflow to the recycled solvent stock, and an aqueous phase that passes by gravity to a wash water tank from which it is recycled to the first mixer to be placed in contact with the organic current to be treated,
drawning off a quantity of the aqueous phase from the wash water circuit to limit the impurities content, while maintaining the level constant in the wash water tank by means of the addition of fresh water.

## Patentansprüche

1. **VERFAHREN ZUR BESEITIGUNG DER ANSAMMLUNG-VERSEUCHUNGSSTOFFE IN EINER ORGANISCHE STRÖMUNG FÜR ERZEUGUNG REINE PHOSPHORSÄURE**, wobei die durchlaufende Behandlung der organische Strömung, die aus einer Mischung von TBP (Tributylphosphat) und Kerosen in drei Etappen besteht, und nachtträglich, ausgehend von unreine Phosphorsäure, ihre zyklische Anwendung an der Herstellung von reine Phosphorsäure, umfasst, wobei diese zyklische Anwendung die folgende Stufen umfasst:
das Wässern der organische Strömung in einem Mixer mit sauberem Wasser, in einem Volumenverhältnis Lösungsmittel/Wasser von 4/1 bis 8/1 auf einer Temperatur zwischen 10 und 70°C,
das Abscheiden der sich erfolgte Mischung in einem Sinkabscheider in zwei Phasen, eine organische Phase die durch Überlaufen zum Mischer der zweite Etappe durchströmt, und eine wäßrige Phase die durch die Schwerkraft zum Mischer der dritte Etappe durchströmt,
das in Berührung Bringen in einem Mischer der zweite Etappe der organische Phase vom vorhergehenden Sinkabscheider mit einer alkalische Lösung von 2 bis 10% in Gewicht und einem Volumverhältnis zwischen organische Phase und wäßrige Phase von 1/1 bis 4/1 auf einer Temperatur zwischen 20 und 60°C,
das Abscheiden der sich erfolgte Mischung in einem Sinkabscheider in zwei Phasen, die organische Phase die durch Überlaufen zum Mischer der nachfolgende Etappe durchströmt, und eine wäßrige Phase mit einem niedergeschlagenen Feststoff die das Verfahren verläßt und zur Aufbereitungsanlage von den Flüssigkeiten die aus der Anlage kommen,
das in Berührung Bringen der organische Phase vom vorhergehenden Sinkabscheider mit der wäßrige Phase des ersten Sinkabscheider auf einer Temperatur zwischen 20 und 60°C,
das Abscheiden der sich erfolgte Mischung in einem Sinkabscheider, in eine aufgearbeitete organische Phase die durch Überlaufen zur rückgeführte Lösungslehre der Auslösungsmittel durchströmt, und eine wäßrige Phase die durch die Schwerkraft
in einen Behälter für Wasser zum Waschen durchströmt, und von diesem an, zum ersten Mischer rückgeführt wird, damit es in Berührung mit der zu Verarbeiten organische Strömung zu bringen,
die Ausziehung einer bestimmte Menge der wäßrige Phase aus der Kreise des Wasser zum Waschen, damit den Verunreinigungsgehalt zu begrenzen, indem der Pegel im Behälter für Wasser zum Waschen, durch Zugabe sauberes Wasser, Konstant gehalten wird.

## Revendications

1. **PROCEDE POUR L'ELIMINATION DE POLLUANTS D'ACCUMULATION DANS UN COURANT ORGANIQUE AFIN DE PRODUIRE DE L'ACIDE PHOSPHORIQUE PUR,** comprenant le traitement en continu du courant organique composé d'un mélange de TBP (tributylphosphate) et de kérosène en trois étapes, et ultérieurement son utilisation cyclique dans la fabrication d'acide phosphorique pur à partir d'acide phosphorique impur comprenant
le lavage du courant organique avec de l'eau propre dans un mélangeur, avec un rapport de dissolvent/eau dans un volume de 4/1 à 8/1 à une température entre 10 et 70°C,
la séparation du mélange résultant dans un sédimentateur en deux phases, une phsase organique qui passe par débordement au mélangeur de la seconde étape et une phase acqueuse qui passe par gravité au mélangeur de la troisième étape,
la mise en contact dans un mélangeur de la seconde étape de la phase organique du sédimentateur précédent avec une solution alcaline entre 2 et 10% en poids et un rapport en volume de la phase organique à la phase acqueuse de 1/1 à 4/1 à une température entre 20 et 60°C,
la séparation du mélange résultant dans un sédimentateur en deux phases, la phase organique qui passe par débordement au mélangeur de l'étape suivante, et une phase acqueuse avec un solide précipité qui abandonne le processus et est envoyé à la station de traitement des effluents,
la mise en contact de la phase organique du sédimentateur précédent avec la phase acqueuse du premier sédimentateur à une température entre 20 et 60°C,
la séparation du mélange résultant dans un sédimentateur,
dans une phase organique regénérée, qui passe par débordement à la solution étalon de dissolvent recirculée et une phase acqueuse qui passe par gravité à un réservoir d'eau de lavage à partir duquel ce dernier recircule au premier mélangeur pour être mis en contact avec le courant organique en cours de traitement,
l'extraction d'une quantité de phase acqueuse du circuit d'eau de lavage pour limiter le contenu en impuretés, pendant que l'on maintient le niveau constant dans le réservoir d'eau de lavage grâce à l'addition d'eau propre.
